# EUROPEAN PATENT APPLICATION

(11) **EP 3 355 608 A1**
(43) Date of publication of application: **01.08.2018**
(21) Application number: 16848504.3
(22) Date of filing: 08.09.2016
(51) Int. Cl.: H04W 24/10, H04W 72/04

(54) **USER TERMINAL, WIRELESS BASE STATION, AND WIRELESS COMMUNICATION METHOD**

(30) Priority: 24.09.2015 JP 2015187224
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/076420
(87) International publication number: WO 2017/051716

(57) **Abstract**

The present invention is designed so that UL transmission can be made adequately even when channel state information of a plurality of CCs is transmitted. A user terminal can communicate with a radio base station by using a plurality of component carriers (CCs), and has a transmission section that transmits delivery acknowledgment signals for one or more CCs and/or channel state information of a plurality of CCs, in a predetermined subframe, in an uplink control channel, and a control section that performs control so that part or all of the channel state information of the plurality of CCs is dropped when transmission power configured for UL transmission in the predetermined subframe exceeds a predetermined value.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, the specifications of LTE-A (also referred to as LTE-advanced, LTE Rel. 10, 11 or 12) have been drafted for further broadbandization and increased speed beyond LTE (also referred to as LTE Rel. 8 or 9), and successor systems of LTE (also referred to as, for example, FRA (Future Radio Access), 5G (5th generation mobile communication system), LTE Rel. 13 and so on) are under study.

Also, the specifications of LTE-A (also referred to as "LTE-advanced," "LTE Rel. 10," "LTE Rel. 11" or "LTE Rel. 12") have been drafted for further broadbandization and increased speed beyond LTE (also referred to as LTE Rel. 8 or 9), and successor systems of LTE (also referred to as, for example, "FRA" (Future Radio Access), "5G" (5th generation mobile communication system), "LTE Rel. 13" and so on) are under study. Carriers that constitute the fundamental units in carrier aggregation are referred to as "component carriers" (CCs), and are equivalent to the system band of LTE Rel. 8.

When CA is used, in a user terminal (UE: User Equipment), a primary cell (PCell: Primary Cell), which is a cell with high reliability to ensure connectivity, and a secondary cell (SCell: Secondary Cell) which is an adjunct cell, are configured.

The UE can first connect to the PCell and add the SCell if necessary. PCell is a single cell (standalone cell) that supports RLM (Radio Link Monitoring), SPS (Semi-Persistent Scheduling), and the like. SCell is a cell that is configured in UE in addition to PCell.

SCell is added and deleted by RRC (Radio Resource Control) signaling. SCell is in a deactivated state immediately after being added to the user terminal, and can only perform communication (scheduling) after being activated.

Also, the specifications of LTE Rel. 8 to 12 have been drafted assuming exclusive operations in frequency bands that are licensed to operators (licensed bands). As licensed bands, for example, the 800 MHz, 2 GHz and/or 1.7 GHz bands are used. Meanwhile, in LTE of Rel. 13 and later versions, operation in frequency bands where license is not required (unlicensed bands) is also a target of study. For unlicensed bands, for example, the 2.4 GHz and/or the 5 GHz band are used as in Wi-Fi (registered trademark).

Although carrier aggregation (LAA: license-assisted access) between licensed bands and unlicensed bands is placed under study in Rel. 13 LTE, there is a possibility that, in the future, dual connectivity (DC) and unlicensed-band stand-alone will becomes targets of study as well.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Now, in CA in LTE Rel. 10 to 12, the number of CCs that can be configured per user terminal is limited to maximum five. Meanwhile, CA in and after LTE Rel. 13 is required to realize more flexible and high-speed wireless communication, and, for example, a study is in progress to introduce CA enhancement, in which the number of CCs that can be configured per UE in CA is increased, in order to bundle a large number of CCs in a ultra wideband unlicensed bands. Increasing the maximum number of CCs will dramatically improve the achievable peak rates.

In CA enhancement, a study is in progress to alleviate the limit on the number of CCs that can be configured per UE and configure more than 6 CCs (more than 5 CCs). Here, carrier aggregation in which six or more CCs can be configured may be referred to as, for example, "enhanced CA," "Rel. 13 CA," and so on.

When the number of CCs that can be configured in a user terminal is expanded to six or more (for example, 32), it becomes difficult to use the transmission methods of existing systems (Rel. 10 to 12) on an as-is basis.

For example, in existing systems, periodic CSI reporting (P-CSI reporting) in which UE transmits channel state information (CSI) in subframes of a predetermined cycle is supported. However, with periodic CSI reporting in existing systems, only one CC's CSI transmission can be transmitted per subframe. For this reason, the periodic CSI reporting method of existing systems is likely to be unsuitable to cases where the channel state information of many CCs needs to be reported, such as when the number of CCs is expanded to six or more.

For that reason, with the expansion of the number of CCs to be configured, it may be possible that the user terminal multiplexes the channel state information of a plurality of CCs and transmits on the uplink control channel (for example, PUCCH). However, when the number of simultaneously transmitted channel state information increases, there is a possibility that a power limited state occurs in which the required power for UL transmission exceeds a predetermined value (maximum permissible power) and UL transmission may not be performed properly.

The present invention has been made in view of the above, and it is therefore an object of the present invention to provide a user terminal, a radio base station and a radio communication method that allow adequate UL transmission even when channel state information of multiple CCs is transmitted.

### Solution to Problem

According to one aspect of present invention, a user terminal can communicate with a radio base station by using a plurality of component carriers (CCs), and this user terminal has a transmission section that transmits delivery acknowledgment signals for one or more CCs and/or channel state information of a plurality of CCs, in a predetermined subframe, in an uplink control channel, and a control section that performs control so that part or all of the channel state information of the plurality of CCs is dropped when transmission power configured for UL transmission in the predetermined subframe exceeds a predetermined value.

### Advantageous Effects of Invention

According to the present invention, it is possible to properly perform UL transmission even when channel state information of a plurality of CCs is transmitted.

### Brief Description of Drawings

FIG. 1 is a diagram to explain carrier aggregation;
FIG. 2A and FIG. 2B are diagrams to show an example of information included in UCI when transmitting a plurality of P-CSIs in PF 3 and new PF;
FIG. 3A and FIG. 3B are diagrams to show an example of UL transmission power that is configured when P-CSIs of a plurality of CCs are transmitted;
FIG. 4A and FIG. 4B are diagrams to show an example of power scaling with respect to the UL transmission power that is configured when transmitting P-CSIs of a plurality of CCs;
FIG. 5 is a diagram to show an example of a UL transmission method according to the first example;
FIG. 6A is a diagram to show another example of the UL transmission method in the first example, FIG. 6B is a diagram to show a case where the CS index of DMRS is configured to a predetermined value, and FIG. 6C is a diagram to show an example of a table in which the correspondence between the number of CSIs to be transmitted and the CS indexes is defined;
FIGs. 7A and 7B are diagrams to show an example of explicit reporting of information on drops in the first example;
FIG. 8A is a diagram to show another example of explicit reporting of information on drops in the first example, and FIG. 8B is a diagram to show an example of a table in which correspondence between the number of CSIs to be transmitted and predetermined bit values is defined;
FIGs. 9A and 9B are diagrams to show an example of a reporting method of information on drops in the second example;
FIG. 10A is a diagram to show an example of the UL transmission method in the third example, FIG. 10B is a diagram to show a case where the DMRS scrambling sequence and/or CS index transmitted in a predetermined PF is configured to a predetermined value, and FIG. 10C is a diagram to show an example of a table in which correspondence between the number of CSIs and scramble sequences and/or CS indices of predetermined signals is defined;
FIG. 11A is a diagram to show an example of explicit reporting of information on drops in the third example, and FIG. 11B is a diagram to show an example of a table in which the number of CSIs to transmit and predetermined bit values are defined;
FIG. 12 is a diagram to show an example of a schematic structure of a radio communication system according to an embodiment of the present invention;
FIG. 13 is a diagram to show an example of an overall structure of a radio base station according to an embodiment of the present invention;
FIG. 14 is a diagram to show an example of a functional structure of a radio base station according to one embodiment of the present invention;
FIG. 15 is a diagram to show an example of an overall structure of a user terminal according to an embodiment of the present invention; and
FIG. 16 is a diagram to show an example of a functional structure of a user terminal according to an embodiment of the present invention.

### Description of Embodiments

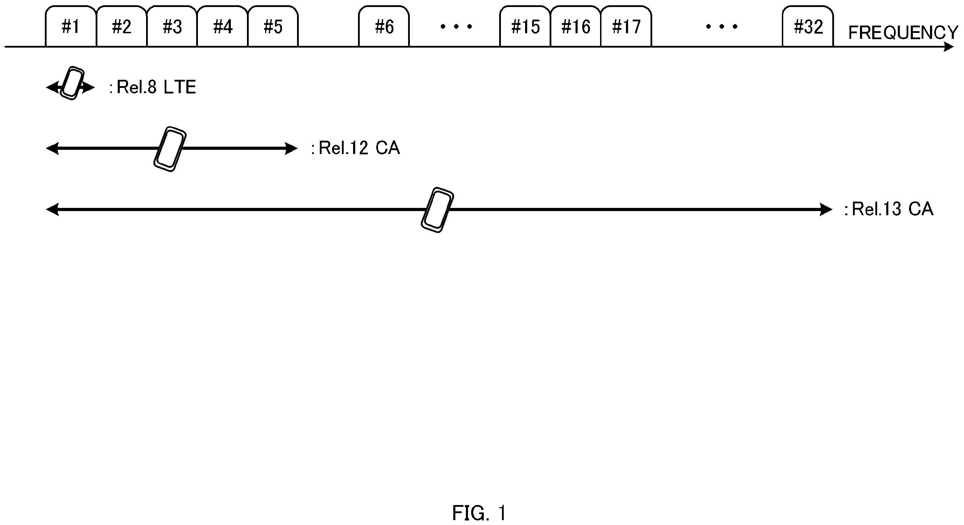

FIG. 1 is a diagram to explain carrier aggregation. As shown in FIG. 1, in CA of up to LTE Rel. 12, maximum five component carriers (CCs) (CC #1 to CC #5) are bundled, where the system band of LTE Rel. 8 constitutes one unit. That is, in CA up to LTE Rel. 12, the number of CCs that can be configured per UE is limited to a maximum of five.

On the other hand, in CA of LTE Rel. 13, a study is in progress to expand the bandwidth further by bundling six or more CCs. That is, in CA of LTE Rel. 13, expansion of the number of CCs (cells) that can be configured per UE to six or more (CA enhancement) is being studied. For example, as shown in FIG. 1, when 32 CCs (CC #1 to CC #32) are bundled, a bandwidth of maximum 640 MHz can be secured.

More flexible and faster radio communication is expected to be made possible by thus reducing the limit on the number of CCs that can be configured per UE. Also, expanding the number of CCs like this is an effective way to widen the band based on CA (LAA: License-Assisted Access) between licensed bands and unlicensed bands. For example, five licensed band CCs (= 100 MHz) and fifteen unlicensed band CCs (= 300 MHz) are bundled, and a bandwidth of 400 MHz can be secured.

By the way, in the existing system (LTE Rel. 8-12), uplink control information (UCI) is fed back from the UE to a device on the network side (for example, a radio base station (eNB: eNodeB)). The UE may transmit UCI on the uplink shared channel (PUSCH: Physical Uplink Shared Channel) at the timing when the uplink data transmission is scheduled. The radio base station performs data retransmission control and scheduling control on the UE based on the received UCI.

UCI in existing systems channel state information (CSI: Channel State Information), which includes at least one of channel quality indicator (CQI), precoding matrix indicator (PMI), precoding type indicator (PTI), and rank indicator (RI), and includes delivery acknowledgment information for downlink signals (for example, downlink shared channel (PDSCH: Physical Downlink Shared Channel)).

For example, in existing systems, periodic CSI reporting, in which the user terminal transmits channel state information (CSI) in subframes of a predetermined cycle, is supported. CSI transmitted in periodic CSI reporting may be referred to as "periodic CSI" or "P-CSI," and will be referred to as "P-CSI" below. Further, the delivery acknowledgment information may be referred to as" HARQ-ACK "(Hybrid Automatic Repeat reQuest Acknowledgment)," ACK/NACK "(A/N)," retransmission control information," is used to determine whether and the like.

To be more specific, UE receives (as configuration) the transmission subframe information for P-CSI from eNB by way of higher layer signaling (for example, RRC signaling). The transmission subframe information here refers to information that indicates the subframe to transmit P-CSI (hereinafter also referred to as a "transmission subframe"), and at least the cycle (interval) of this transmission subframe and the offset value of this transmission subframe with respect to the beginning of the radio frame are included. The UE transmits P-CSI in the transmission subframe of a predetermined cycle indicated by the transmission subframe information.

Feedback (UCI on PUCCH) using an uplink control channel (PUCCH: Physical Uplink Control Channel) and feedback (UCI on PUSCH) using an uplink shared channel (PUSCH: Physical Uplink Shared Channel) are defined as UCI feedback methods. For example, if there is uplink user data, the UE transmits P-CSI using the PUSCH. On the other hand, if there is no uplink user data, the UE transmits P-CSI using the PUCCH.

UCI on PUSCH is used when UCI transmission and PUSCH transmission overlap within one TTI (Transmission Time Interval) (for example, one subframe). In this case, UCI may be mapped to the PUCCH resource and simultaneous PUCCH-PUSCH transmission may be performed, or UCI may map to radio resources in the PUSCH region and only PUSCH transmission may be performed.

In existing systems, PUCCH formats 2, 2a, 2b and 3 are supported as P-CSI transmission formats using an uplink control channel. In these existing PFs, only P-CSI of one CC (cell) can be transmitted. Therefore, when transmitting P-CSIs of a plurality of CCs (cells) using an existing PF, the UE transmits the P-CSIs of a plurality of CCs in different subframes (TDM (Time Division Multiplexing).

Also, when P-CSI transmissions pertaining to a plurality of CCs (cells) collide in the same subframe, the user terminal transmits one CC's P-CSI, which is selected according to a predetermined rule, and stops transmitting (drops) the rest of the CCs' P-CSI. For example, if transmission of P-CSIs of multiple cells conflict, the UE drops the P-CSIs other than the P-CSI of the cell having the smallest index (ServCellIndex) for identifying the serving cell, according to the priority rule prescribed in Rel. 12.

UCI including one CC's P-CSI and a one-bit or two-bit HARQ-ACK is supported by PF 2a/2 b. In this case, the HARQ-ACK is used to modulate the demodulation reference signal (DMRS: DeModulation Reference Signal). To be more specific, the HARQ-ACK is used as DMRS scrambling seed. P-CSI is multiplexed to symbols other than DMRS.

Also, UCI including one CC's P-CSI and a multiple-bit HARQ-ACK is supported by PF 3. In this case, the bit sequences consisting of the HARQ-ACK and the P-CSI are joint-coded, and the encoded bit sequence is multiplexed on symbols other than the DMRS. When ARI (Ack/nack Resource Indicator) is available, PF 3 is used, and, if ARI is not available, PF 2a/2 b is used (fallback).

However, when P-CSI for six or more CCs (cells) is transmitted in different subframes using an existing PUCCH format, it is expected that the P-CSI reporting cycle becomes longer than in existing systems in each CC. For example, if an attempt to transmit P-CSI for 32 CCs using an existing PF is made, the P-CSI reporting cycle in each CC will be 32 ms at the shortest.

Also, when a CC (PCell or PUCCH SCell) that transmits the PUCCH is a TDD (Time Division Duplexing) carrier, uplink subframes that can transmit the PUCCH are limited. For example, when using an uplink/downlink configuration (TDD UL/DL configuration) with a DL/UL ratio of 5:1, it is necessary to multiply the cycle by 5. Normally, on the side of the radio base station, it is desirable to acquire P-CSI from the user terminal in a timely manner, and therefore it is not desirable to increase the P-CSI reporting cycle of each CC.

Also, if P-CSI for six or more CCs (cells) is transmitted using an existing PUCCH format, this might lead to increased collisions of P-CSI among multiple CCs (cells) in the same subframe. In such a case, the amount of information that is stopped from being transmitted (that is, dropped) is likely to increase.

As described above, the existing periodic CSI reporting method to use existing PUCCH formats is more likely to be unsuitable to cases where P-CSI of a large number of CCs (cells) needs to be reported, such as when the number of CCs (cells) that can be configured per user terminal is expanded to six or more (for example, 32).

Here, when the number of CCs (cells) that can be configured per user terminal is expanded to six or more (for example, 32), it is necessary to make it possible to transmit delivery acknowledgment information (HARQ-ACKs) in response to downlink signals from six or more CCs. For this reason, in LTE Rel. 13, a new PUCCH format is being considered which can transmit delivery acknowledgment information of more CCs than existing PUCCH formats (for example, PF 1a/1b, 3, etc.) (that is, format that can transmit a larger number of bits).

The new PUCCH format is expected to have larger capacity than existing PUCCH formats 2, 2a, 2b and 3 that can transmit one CC's P-CSI. The new PUCCH format may be referred to as "new PF," "enhanced PF," "Rel. 13 PF," "PF 4," and so on. For example, while PF 3 can transmit up to 10 bits when FDD is used (Frequency Division Duplex) and transmit up to 21 bits when TDD is used, a new PF may be comprised of radio resources capable of transmitting 64 to 256 bits (for example, radio resources capable of transmitting 128 bits).

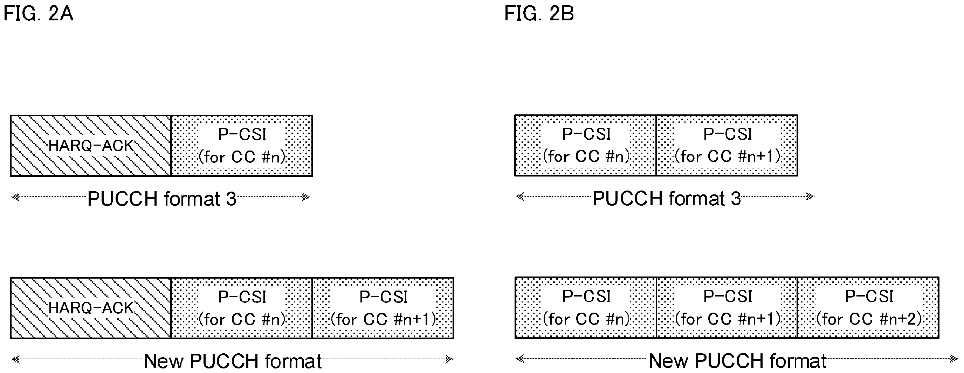

In order to solve the above problem, a study is in progress to transmit UCI including a plurality of P-CSIs in one subframe by using existing PF and new PF. FIG. 2 is a diagram to show an example of information included in UCI when multiple P-CSIs are transmitted in PF 3 and new PF. In FIG. 2A, UCI including HARQ-ACK and P-CSI is shown, and, in FIG. 2B, UCI including only P-CSI is shown.

For example, when PF 3 is used, as in existing configurations, it may be possible to include HARQ-ACK bit sequence and one P-CSI bit sequence (FIG. 2A), or unlike existing configurations, it may be possible to include multiple (for example, two) P-CSI bit sequences (FIG. 2B). Also, in the case where a new PF is used, it is possible to include a bit sequence of HARQ-ACK and a plurality (for example, two) of P-CSI bit sequences (FIG. 2A), or it may be possible to include multiple (for example, 3) P-CSI bit sequences (FIG. 2B). Thus, in future wireless communication systems, it is assumed that a plurality of CSIs are multiplexed on the uplink control channel and transmitted using a new PF or PF 3.

By the way, the user terminal needs to perform UL transmission at or below the maximum allowable power (Pcmax). When the total value of the transmission power of each UL signal configured from the radio base station exceeds the maximum allowable power, (required power), the user terminal controls the UL transmission power based on the priority assigned to the UL channel and the reference signal. For example, if the total value of the required power of the UL signal exceeds the maximum allowable power, the user terminal performs power scaling or drop based on the priorities defined in the order of the random access channel (PRACH), the uplink control channel (PUCCH), the uplink shared channel (PUSCH) and the sounding reference signal (SRS).

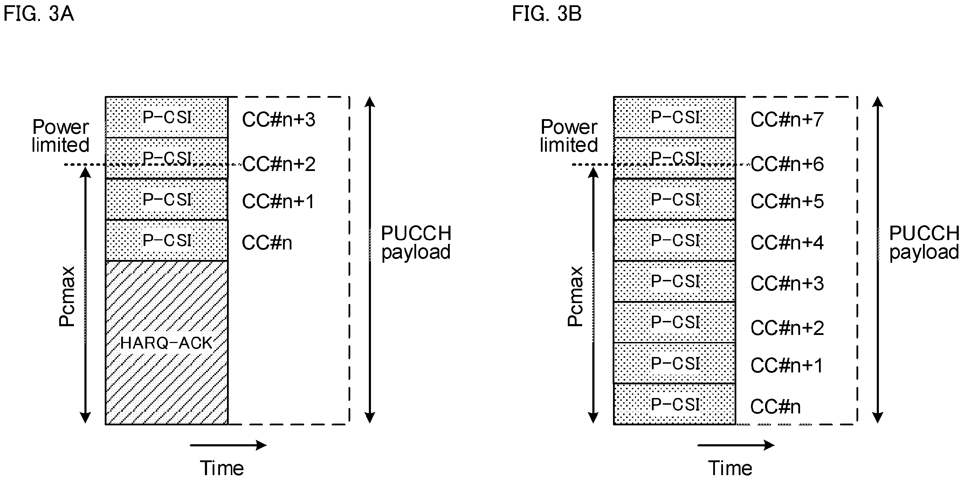

As shown in FIG. 2, if it is permissible to simultaneously transmit multiple CCs' CSIs, the required power of the uplink control channel (PUCCH) may exceed the maximum allowable power. FIG. 3A shows example of the relationship between the required power and the maximum allowable power to be configured in UL in the case where HARQ-ACK and P-CSI of CC (CCs #n - #n+3) are transmitted on the uplink control channel. FIG. 3B shows an example of the relationship between the required power configured in UL and the maximum allowable power in the case where the P-CSI of multiple CCs (CCs #n - #n+7) is transmitted on the uplink control channel.

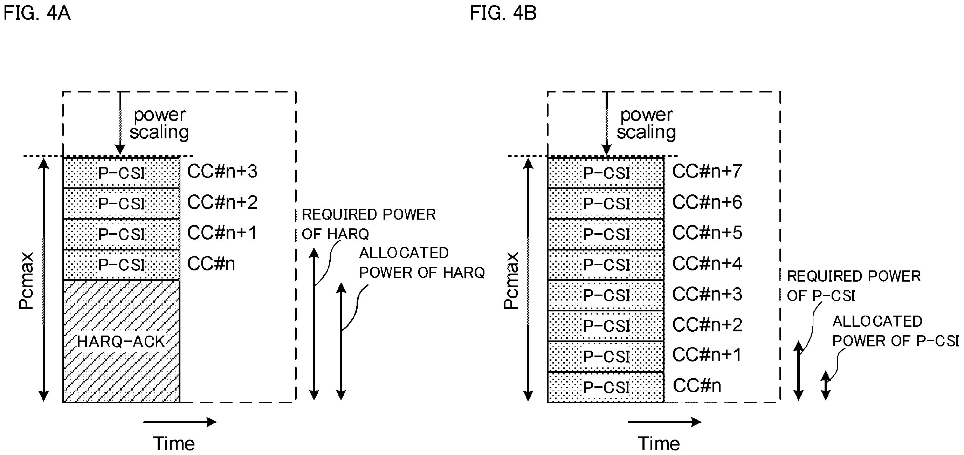

In the existing system, when the required power of the uplink control channel is larger than the maximum allowable power, power scaling is applied to the transmission power of the uplink control channel. For example, when power scaling is applied to HARQ-ACK and multiple P-CSIs (see FIG. 4A), the transmission power actually allocated to the HARQ-ACK may be lower than the required power to enable appropriate transmission of the HARQ-ACK. In such a case, the radio base station cannot properly receive the HARQ-ACK transmitted from the user terminal, and retransmission-induced delay may be produced.

Also, in the case where power scaling is applied to a plurality of P-CSIs (see FIG. 4B), there is a possibility that the transmission power allocated to each P-CSI may be lower than the request power that enables proper transmission of the P-CSI. In such a case, the radio base station may not be able to properly receive the CSIs of multiple CCs transmitted from the user terminal.

As described above, the present inventors focused on the point that UL transmission cannot be performed properly if power scaling is used when CSIs of multiple CCs are multiplexed and transmitted in a predetermined subframe and cause a power limited state, and the present inventors came up with an idea of controlling to drop some or all of the multiple CSIs. This can prevent transmission power of high priority signals from decreasing (for example, HARQ-ACK, PCell CSI, etc.).

In addition, the inventors of the present invention focused on the point that, when the user terminal drops a part or all of the CSIs of the plurality of CCs, information concerning the drop needs to be shared between the user terminal and the radio base station (whether or not CSI is dropped, the number of CSIs sent from the user terminal, etc.), in order to properly receive the uplink control information on the side of the radio base station (for example, decoding). Therefore, the present inventors came up with the idea of causing the user terminal to report information about the dropping of CSIs implicitly or explicitly to the radio base station. As a result, the radio base station can learn the number of CSIs to be transmitted from the user terminal (the number of CCs performing CSI transmission), so that the radio base station can appropriately perform reception processing.

Now, embodiments of the present invention will be described below. Now, although example cases will be described with the following embodiments in which CA to use maximum 32 CCs is configured in user terminals, the application of the present invention is by no means limited to this. For example, the methods to be described with the embodiments can be used even when CA to use five or fewer CCs is configured.

In the following embodiments, an example in which periodic CSI (P-CSI) is used will be described, but the present embodiment is not limited to this. For example, the embodiments can also be applied to aperiodic CSI (A-CSI).

### (First Example)

In the first example, the case where the user terminal controls transmission of HARQ-ACK of one or more CCs and transmission of channel state information (CSI) of multiple CCs based on transmission power that is configured for UL transmission in a predetermined subframe will be explained.

As mentioned above, when the transmission power configured for UL transmission such as PUCCH transmission becomes larger than a predetermined value (required power), the user terminal drops part or all of the CSIs and performs UL transmission (HARQ-ACK transmission, etc.). The predetermined value can be the maximum allowable power (Pcmax) configured for UL transmission.

When the transmission power configured for UL transmission exceeds the maximum allowable power (Pcmax), the user terminal determines that a power limited state occurs (power-limited), and the user terminal drops part or all of the CSIs of multiple CCs to be simultaneously multiplexed. Also, the user terminal implicitly or explicitly reports to the radio base station information about the dropping of CSIs (or information indicating whether or not a power limited state has occurred).

### <Implicit reporting>

### (1) When all the CSIs of multiple CCs are dropped

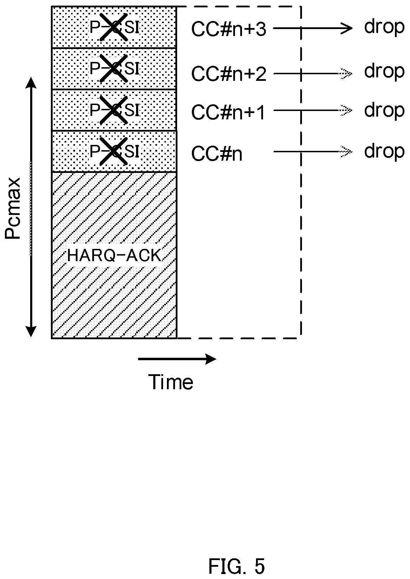

When the transmission power configured for UL transmission exceeds a predetermined value, the user terminal can perform UL transmission by dropping all the CSIs of multiple CCs (see FIG. 5). In FIG. 5, it is shown that the user terminal drops all of the CSIs corresponding to a plurality of CCs #n - #n+3 and transmits the HARQ-ACK. Also, when the user terminal drops all the CSIs of multiple CCs, the user terminal reports the drop to the radio base station (or information indicating that a power limited state has occurred).

Here, assume a case where the user terminal transmits HARQ-ACK and CSI with resource specified by ARI, using a new PUCCH format (new PF) or PUCCH format 3 (PF 3). In such a case, the user terminal can report information about the dropping of CSIs to the radio base station using a predetermined signal sequence or cyclic shift (CS) index.

For example, if the user terminal drops all the CSIs of multiple CCs, the user terminal configures the demodulation reference signal (DMRS) scrambling sequence for uplink control information transmitted in a predetermined PF, and/or the CS index to apply the DMRS, configured to predetermined values. Also, when a new PF is used, using a UE-specific CRC (Cyclic Redundancy Check) scrambling sequence configured to a predetermined value, the user terminal can report information about the dropping of CSIs to the radio base station.

In this way, when a power limited state is caused by UL transmission, the user terminal can preferentially transmit the HARQ-ACK over the CSIs of the plurality of CCs, in the new PF or PF 3. By doing so, retransmission delay can be suppressed. The radio base station can determine whether or not the user terminal has dropped CSIs of a plurality of CCs (or whether or not a power limited state has occurred) based on a predetermined signal sequence and/or CS index transmitted from the user terminal, and perform the receiving operation (for example, demodulation processing, decoding processing, etc.).

In this way, whether CSI has been dropped in the user terminal (whether or not the power limited state has occurred) is reported to the radio base station, so that the radio base station side can judge whether or not CSI is transmitted from the user terminal, and perform reception processing appropriately.

Next, the case where the user terminal transmits the HARQ-ACK and the CSI in the resource reported in higher layer signaling using a new PF or PF 3 will be explained (for example, RRC signaling). In this case, in the subframe in which the power limited state does not occur, the user terminal transmits the HARQ-ACK and the CSI of the plurality of CCs with the resource reported in higher layer signaling.

On the other hand, in power limited subframes, the user terminal drops all the CSIs of the plurality of CCs, and transmits the HARQ-ACK in a predetermined PUCCH format. When the HARQ-ACK to be transmitted is one bit or two bits, the user terminal transmits the HARQ-ACK with the resource selected based on the control channel element (CCE) index, using PF 1a/1b. When three or more CC HARQ-ACKs are sent, using a new PF or PF 3, the user terminal transmits the HARQ-ACKs with resources reported by the ARI.

The radio base station carries out the blind decoding of resources reported by higher layer signaling to user terminals and resources specified in ARI (and/or resources corresponding to CCE indexes), and performs reception operation of PUCCH transmitted from the user terminal. Based on the resource where the PUCCH is received, the radio base station can judge whether or not CSIs of multiple CCs have been dropped on the user terminal side (whether or not a power limited state has occurred).

### (2) Part of CSIs of multiple CCs are dropped

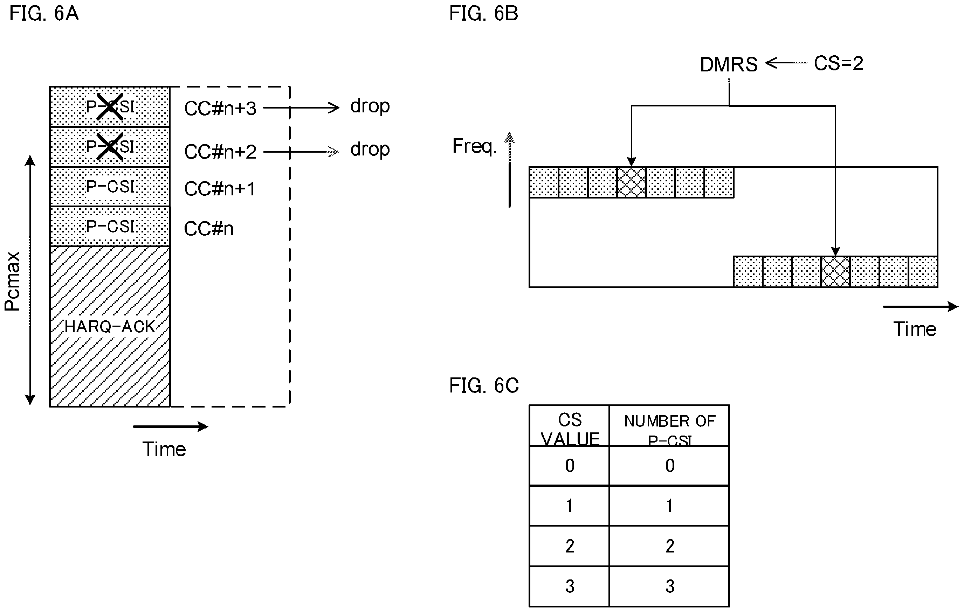

When a power limited state occurs in UL transmission, the user terminal can also perform UL transmission by dropping a part of the CSIs of multiple CCs (see FIG. 6A). In the case shown in FIG. 6A, the user terminal drops the CSIs corresponding to CC #n+2 and CC #n+3 among a plurality of CCs #n - #n+3, the user terminal transmits the CSIs corresponding to CC #n and CC #n+1. The user terminal can determine the CCs to drop in consideration of the predefined priority that is configured for each CC.

Also, among the CCs where CSI transmission is performed, the user terminal reports the number of CCs corresponding to the CSIs to be transmitted to the radio base station (or the number of CCs corresponding to the dropped CSIs). In the case shown in FIG. 6A, the user terminal implicitly reports to the radio base station that the number of CSIs to be transmitted is 2 (the number of CCs corresponding to the CSIs to be transmitted).

Here, it is assumed that the user terminal transmits HARQ-ACK and CSI with resources designated by ARI using a new PF or PF 3. In such a case, using a predetermined signal sequence or a cyclic shift (CS) index, the user terminal can report information about the dropping of CSIs to the radio base station (information on the number of CSIs to be transmitted (number of CCs)).

For example, the user terminal configures a UE-specific DMRS scrambling sequence to transmit in the PUCCH format and/or a CS index to predetermined values based on the number of CSIs sent (or the number of CSIs to drop) (see FIG. 6B and FIG. 6C). In FIG. 6B, the case where the user terminal configures the DMRS CS index to a predetermined value (here, CS = 2) is shown. In this case, it is possible to prepare and use a predefined table in which the correspondence between the number of CSIs to be transmitted and CS indices are predefined (see FIG. 6).

Also, when a new PF is used, the user terminal can report information on the number of CSIs transmitted with the UE-specific CRC scrambling sequence configured to a predetermined value to the radio base station. In this case as well, it is possible to prepare and use a table in which the relationship between the CRC sequence value and the number of CSIs to be transmitted is predefined.

Next, assume a case where the user terminal transmits HARQ-ACK and CSI in the resource reported by higher layer signaling Using new PF or PF 3. In such a case, if the number of CSIs to be transmitted is one or more, the user terminal configures the UE-specific DMRS scrambling sequence and/or CS index transmitted in a predetermined PF to predetermined values (see FIGs. 6B and 6C).

On the other hand, if the number of CSIs to be transmitted is one and the number of HARQ-ACK bits is one or two bits, the user terminal can perform PUCCH transmission using existing PUCCH format 2a/2b as fallback.

Based on the PUCCH signal sequence and/or CS index transmitted from the user terminal, the radio base station can judge the number of CSIs to be transmitted from the user terminal, so that the radio base station can appropriately perform the receiving operation (for example, demodulation processing, decoding processing, etc.).

### <Explicit reporting>

### (1) When all the CSIs of multiple CCs are dropped

If the transmission power configured for UL transmission exceeds a predetermined value, the user terminal can perform UL transmission by dropping all the CSIs of multiple CCs. In such a case, the user terminal can include bit information that indicates that all the CSIs of multiple CCs have been dropped (or bit information indicating that a power limited state has occurred), in a UL transmission data, and report this, explicitly, to the radio base station.

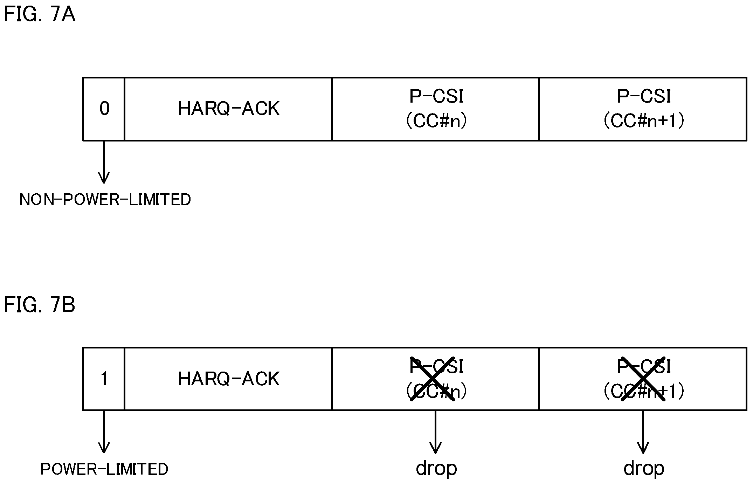

For example, when the user terminal transmits HARQ-ACK and CSI in the resource specified by ARI, using a new PF or PF 3, in subframes in which the power limited state caused by the UL transmission does not occur, the user terminal transmits HARQ-ACKs and CSIs of multiple CCs. In this case, the user terminal performs UL transmission by including bit information indicating whether or not CSIs have been dropped, in UL control information (for example, the first one bit). If CSI is not dropped (power limited state does not occur), the user terminal can perform UL transmission by adding predetermined bit information (for example, "0") indicating that CSI is not dropped, to UL control information (see FIG. 7A).

On the other hand, in subframes where UL transmission causes a power limited state, the user terminal drops all the CSIs of the plurality of CCs and transmits HARQ-ACKs. in this case, the user terminal can perform UL transmission by adding predetermined bit information (for example, "1") indicating that the CSIs have been dropped (or predetermined bit information indicating that a power limited state has occurred), to UL control information (for example, the first one bit) (see FIG. 7B).

Based on the predetermined bit information included in the received UL control information, the radio base station can judge whether CSIs have been dropped at the user terminal (whether or not a power limited state has occurred), and perform reception processing.

### (2) Part of CSIs of multiple CCs are dropped

When the transmission power configured for UL transmission exceeds a predetermined value, the user terminal can perform UL transmission by dropping a part of the CSIs of multiple CCs. In such a case, the user terminal can include bit information indicating the number of CSIs to be transmitted (or the number of dropped CSIs) in UL transmission data, and report it to the radio base station.

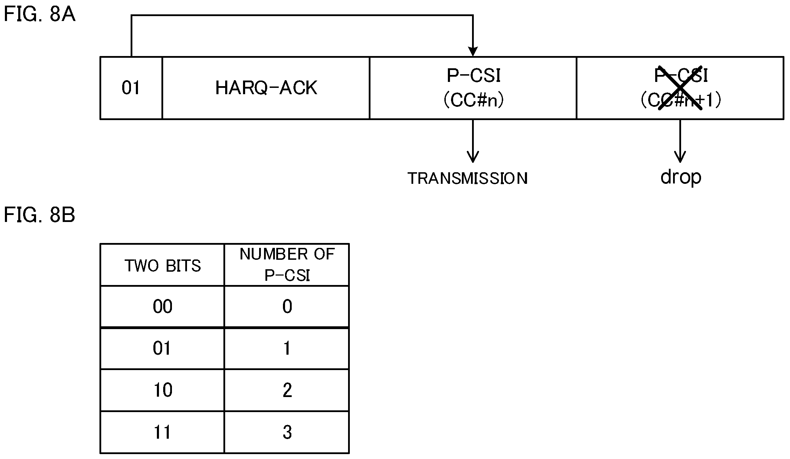

In this case, the user terminal configures bit information indicating the number of CSIs to be transmitted in UL control information (for example, the first several bits), and performs UL transmission. For example, the user terminal adds predetermined bit information (for example, a 2-bit bit value) associated with the number of CSIs to be transmitted, to UL control information, and performs UL transmission (see FIG. 8A). In this case, it is possible to prepare and use a table in which correspondence between the number of CSIs to be transmitted and predetermined bit values is predefined (see FIG. 8B).

In FIG. 8, the number of CSIs to be transmitted is one, and predetermined bit information ("01") indicating that the number of CSIs to be transmitted is one is configured in UL transmission data, including HARQ-ACK and CSI. Note that the bit information indicating the number of CSIs to be transmitted is not limited to two bits and may be appropriately configured according to the number of CCs.

Based on the predetermined bit information included in the received UL control information, the radio base station can learn the number of CSIs to be transmitted from the user terminal, and perform reception processing.

### (Second Example)

In a second example, a method is described in which, in a predetermined subframe, the user terminal controls transmission of CSIs of multiple CCs based on the transmission power configured for UL transmission, and reports information on the drop, to the radio base station. In the second example, it is assumed that CSI is not transmitted simultaneously with HARQ-ACK.

When a power limited state does not occur in UL transmission, the user terminal multiplexes and transmits multiple CCs using a new PF or PF 3. In this case, the user terminal can control transmission of CSIs of multiple CCs using resources reported in ARI or resources reported in higher layer signaling.

On the other hand, when UL transmission enters the power limited state, the user terminal performs control so that the CSI are dropped according to predetermined priority and one CC's CSI is transmitted. In this case, if the user terminal supports a new PF or PF 3, the user terminal transmits the uplink control channel, using PUCCH format 2 supported for transmitting one CC's CSI, instead of using the new PF or PF 3.

That is, when UL transmission enters the power limited state, the user terminal autonomously drops the CSIs of CCs other than the predetermined CC, and changes the PUCCH format to apply and transmits the uplink control channel.

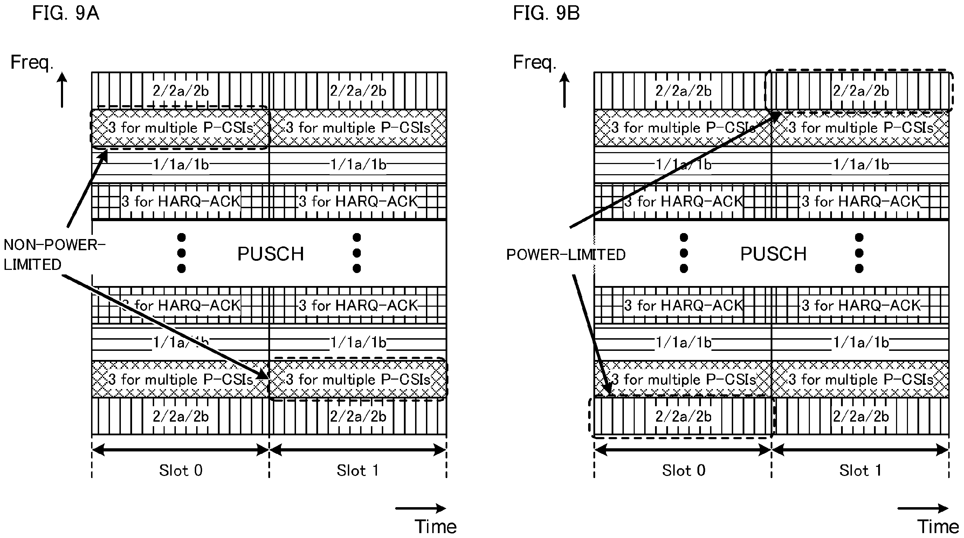

The radio base station performs detection processing (blind detection) for resources used in the new PF or PF 3 and resources used in PF 2 (see FIGs. 9A and 9B). Based on the resource (PF) in which the uplink control information is detected, the radio base station can determine whether or not the user terminal has dropped CSIs (whether power limited state has occurring or not).

For example, when the radio base station detects CSIs of multiple CCs in the new PF or PF 3 (see FIG. 9A), the radio base station can judge that the user terminal is not in the power limited state. On the other hand, if the radio base station cannot detect CSI in the new PF or PF 3, the radio base station can determine that the user terminal is in the power limited state (the user terminal has dropped CSIs, and the radio base station can detect the CSIs of predetermined CCs in PF 2 (see FIG. 9B).

### (Third Example)

In a third example, in a given subframe, the user terminal drops a part of the CSIs of a plurality of CCs based on the transmission power that is configured for UL transmission, and the user terminal implicitly or explicitly reports information on the drop to the radio base station. In the third example, it is assumed that CSI is not transmitted simultaneously with HARQ-ACK.

### <Implicit reporting>

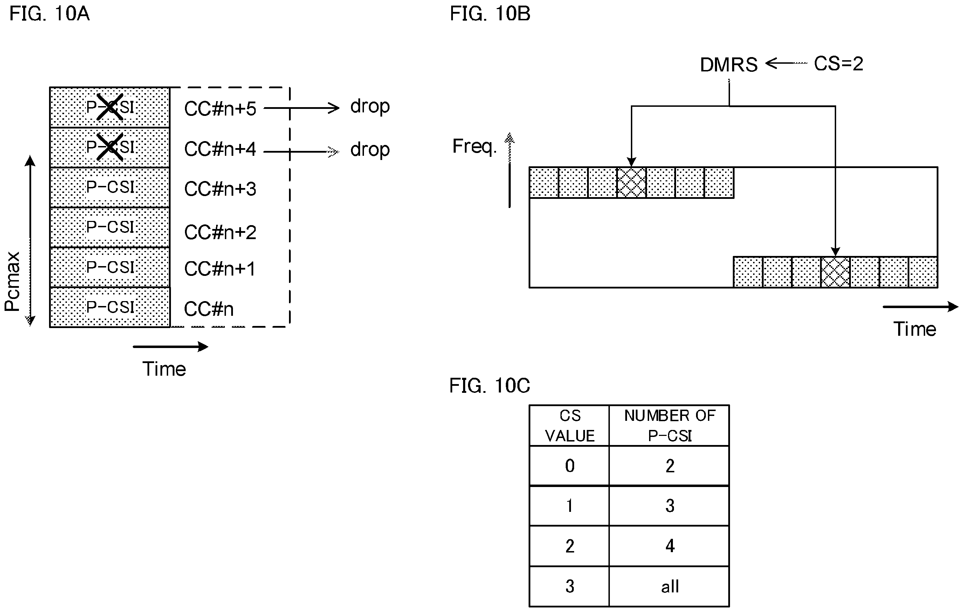

When UL transmission enters the power limited state, the user terminal drops a part of the CSIs of a plurality of CCs and performs UL transmission (see FIG. 10A). In FIG. 10A, it is shown that the user terminal drops the CSIs corresponding to CC #n+4 and #n+5 among a plurality of CCs, and transmits the CSIs corresponding to CCs #n - #n+3.

In such a case, the user terminal reports information on the number of CSIs sent (or the number of dropped CSIs) among the CSIs of multiple CCs to the radio base station. Also, the user terminal can decide the CC to be dropped in consideration of the predetermined priority that is configured for each CC.

Here, it is assumed that the user terminal transmits CSIs of multiple CCs using a new PF or PF 3. In this case, the user terminal can report information about the dropping of CSIs (information on the number of CSIs to be transmitted) to the radio base station using a predetermined signal sequence or cyclic shift (CS) index.

For example, the user terminal configures the scramble sequence and/or the CS index of the DMRS to be transmitted in a predetermined PF to a predetermined value based on the number of CSIs to be transmitted (or the number of CSIs to be dropped) (see FIG. 10B). Also, when a new PF is used, the user terminal can implicitly report information on the number of CSIs transmitted after configuring the CRC scrambling sequence to a predetermined value, to the radio base station.

Also, the user terminal can prepare and use a table where the correspondence between the number of CSIs and the scrambled sequence and/or CS index of the predetermined signal is predefined (see FIG. 10C).

In FIG. 10A, the number of CSIs to be transmitted is four (CCs #n - CC #n+3), and a predetermined CS index (CS = 2 in FIG. 10C) indicating that the number of CSIs to transmit is four is configured and UL transmission is performed. The number of CSIs to be transmitted (the number of CSIs to be sent) is not limited to 4, but can be configured. Note that the table in FIG. 10C shows a case where the corresponding CS index is also configured when CSI is not dropped.

Also, if the number of CSIs to be transmitted is one due to CSI dropping, the user terminal can perform UL transmission using PUCCH format 2 (fallback). In this way, the PUCCH format is changed and transmitted when the number of CSIs to be transmitted is one, so that, in the table of FIG. 10C, there is no need to define a CS index corresponding to the number of CSI = 1.

When multiple CCs' CSIs are detected in the new PF or PF 3, the radio base station further checks at least one of the DMRS scrambling sequence, the CS index and the CRC scrambling sequence, so that the radio base station can know the number of CSIs (the number of CCs) to be transmitted from the user terminal. On the other hand, if CSI cannot be detected in a new PF or PF 3, the radio base station can detect the channel state information of predetermined CCs in PUCCH format 2.

### <Explicit reporting>

When the UL transmission becomes power-limited, the user terminal drops a part of the CSIs of a plurality of CCs and performs UL transmission, and, furthermore, the user terminal can include bit information that indicates the number of CSIs to be transmitted (or the number of dropped CSIs), in uplink control information, and report the uplink control information to the radio base station.

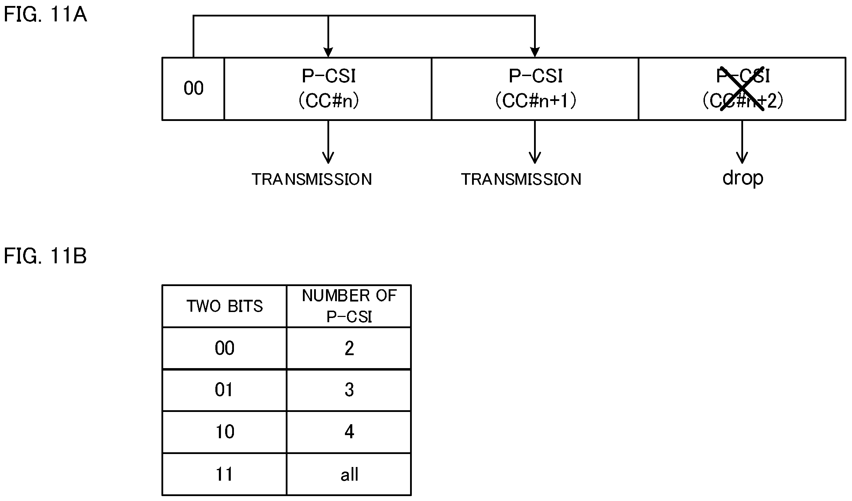

In this case, the user terminal configures bit information indicating the number of CSIs to be transmitted in UL transmission data (for example, the first several bits), and performs UL transmission. For example, the user terminal adds predetermined bits (for example, bit information of two bits) respectively associated with the number of CSIs (the number of CCs) to be transmitted, to UL transmission data, and performs UL transmission (see FIG. 11A). In this case, the user terminal can prepare and use table in which the number of CSIs to be transmitted and predetermined bit values are defined in advance (see FIG. 11B).

In the table of FIG. 11B, CS indices for use when CSIs are not dropped are included. In the case shown in FIG. 11A, the number of CSIs to be transmitted is two, so that bit information ("00") indicating that the number of CSIs (the number of CCs) is two is included in uplink control information.

If the number of CSIs to be transmitted is one due to the CSI drop caused by the power limited state, the user terminal can perform UL transmission using PUCCH format 2 (fallback). In this way, when the number of CCs that transmit CSI is one, the PUCCH format is changed and transmitted, so that there is no need to define a CS index corresponding to the number of CSIs (the number of CCs) = 1 in the table of FIG. 11B.

The radio base station can be configured to perform detection processing (blind detection) for resources used in the new PF or PF 3 and resources used in PF 2. When CSIs of multiple CCs are detected in the new PF or PF 3, the radio base station can know the number of CSIs to be transmitted from the user terminal based on predetermined bit information (several bits at the head). On the other hand, if no CSI is detected in the new PF or PF 3, the radio base station can detect the CSIs of predetermined CCs in PF 2.

### (Radio Communication System)

Now, the structure of the radio communication system according to an embodiment of the present invention will be described below. In this radio communication system, the radio communication methods of the above-described embodiments are employed. Note that the radio communication methods of the above-described embodiments may be applied individually or may be applied in combination.

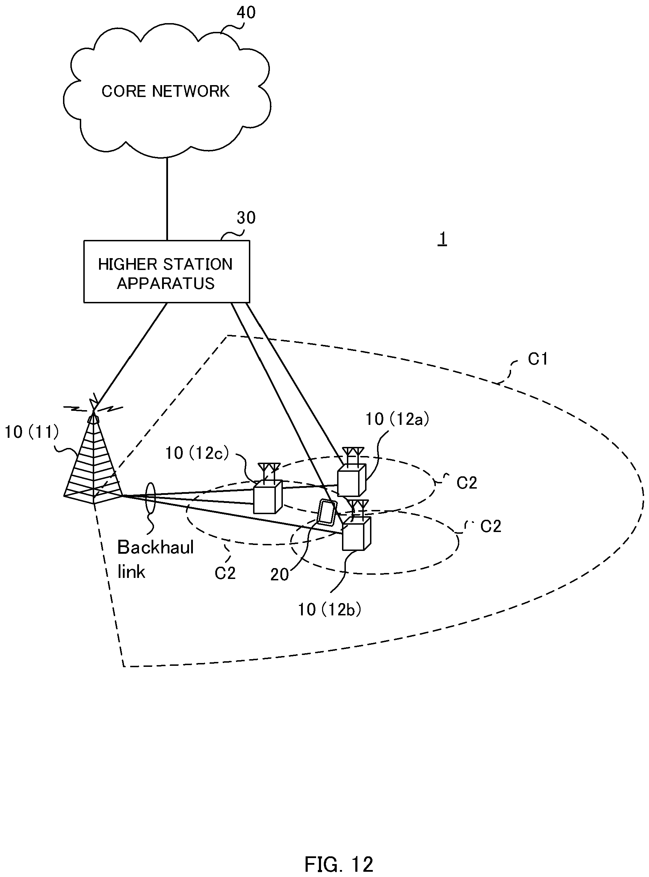

FIG. 12 is a diagram to show an example of a schematic structure of a radio communication system according to one embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 12 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include downlink control channels (the PDCCH (Physical Downlink Control CHannel) and/or the EPDCCH (Enhanced Physical Downlink Control Channel)), the PCFICH (Physical Control Format Indicator CHannel), the PHICH (Physical Hybrid-ARQ Indicator CHannel) and so on. Downlink control information (DCI) including PDSCH and PUSCH scheduling information is communicated by the PDCCH. The number of OFDM symbols for use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio base station>

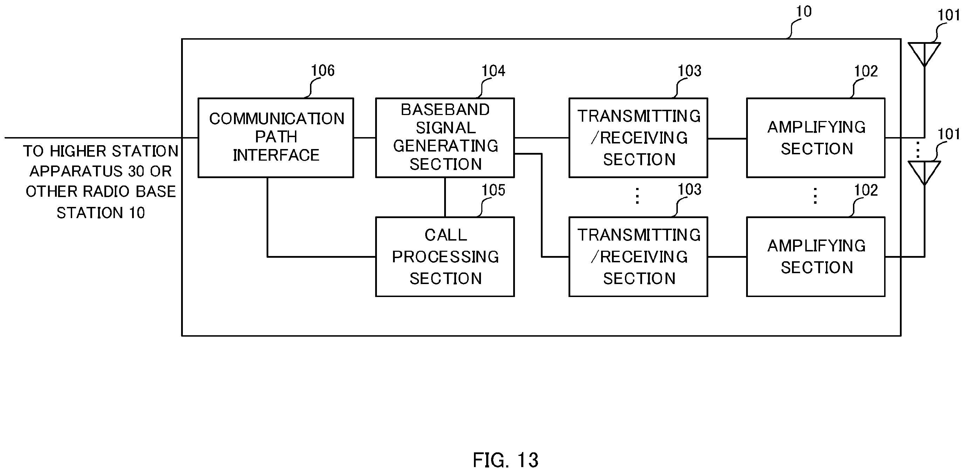

FIG. 13 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections (receiving sections) 103 can receive the HARQ-ACKs of one or more CCs and/or the CSIs of multiple CCs transmitted from the user terminal in predetermined subframes using an uplink control channel. Further, the transmitting/receiving sections (receiving sections) 103 can implicitly or explicitly receive information on the drop of channel state information in the user terminal. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

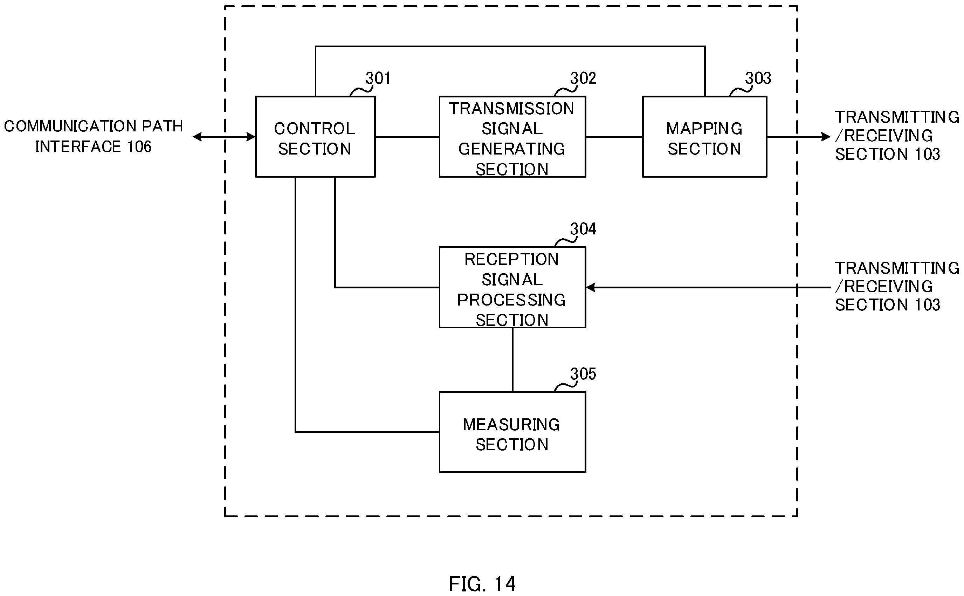

FIG. 14 is a diagram to show an example of a functional structure of a radio base station according to the present embodiment. Note that, although FIG. 14 primarily shows functional blocks that pertain to characteristic parts of the present embodiment, the radio base station 10 has other functional blocks that are necessary for radio communication as well. As shown in FIG. 14, the baseband signal processing section 104 has a control section (scheduler) 301, a transmission signal generation section (generation section) 302, a mapping section 303, a received signal processing section 304 and a measurement section.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of system information, synchronization signals, paging information, CRSs (Cell-specific Reference Signals), CSI-RSs (Channel State Information Reference Signals) and so on. Furthermore, the control section 301 also controls the scheduling of uplink reference signals, uplink data signals that are transmitted in the PUSCH, and uplink control signals that are transmitted in the PUCCH and/or the PUSCH. Note that, for the control section 301, a controller, a control circuit or a control device that can be described based on common understanding of the technical field to which the present invention pertains can be used.

The transmission signal generation section 302 generates DL signals (downlink control signals, downlink data signals, downlink reference signals and so on) based on commands from the control section 301, and outputs these signals to the mapping section 303. To be more specific, the transmission signal generation section 302 generates a downlink data signal (PDSCH) including user data, and outputs it to the mapping section 303. Further, the transmission signal generation section 302 generates a downlink control signal (PDCCH/EPDCCH) including DCI (UL grant), and outputs it to the mapping section 303. Further, the transmission signal generation section 302 generates downlink reference signals such as CRS and CSI-RS, and outputs them to the mapping section 303. Note that, for the transmission signal generation section 302, a signal generator, a signal generating circuit or a signal generating device that can be described based on common understanding of the technical field to which the present invention pertains can be used.

The mapping section 303 maps the downlink signals generated in the transmission signal generation section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the reception process (for example, demapping, demodulation, decoding, etc.) of the UL signals (HARQ-ACK, PUSCH, etc.) transmitted from the user terminal 20. The processing results are output to the control section 301. The receiving process section 304 can be constituted by a signal processor, a signal processing circuit or a signal processing device, and a measurer, a measurement circuit or a measurement device that can be described based on common understanding of the technical field to which the present invention pertains.

The measurement section 305 conducts measurements with respect to the received signals. Also, by using the received signals, the measurement section 305 can measure the received power (for example, RSRP (Reference Signal Received Power)), the received quality (for example, RSRQ (Reference Signal Received Quality)), channel states (CSI) and so on. The measurement results may be output to the control section 301. The measurement section 305 can be constituted by a measurer, a measurement circuit or a measurement device that can be described based on common understanding of the technical field to which the present invention pertains.

### <User terminal>

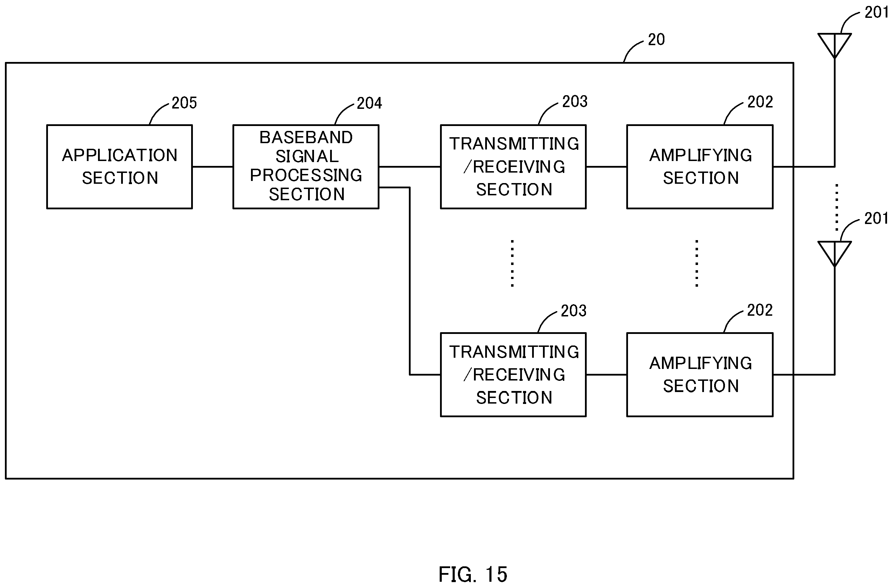

FIG. 15 is a diagram to show an example of an overall structure of a user terminal according to an embodiment of the present invention. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

The transmitting/receiving section (transmitting section) 203 transmits HARQ-ACKs of one or more CCs and/or multiple CCs' CSIs in the uplink control channel in a predetermined subframe. In addition, the transmitting/receiving section (transmission section) 203 can implicitly or explicitly report information on the drop of CSIs to the radio base station. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

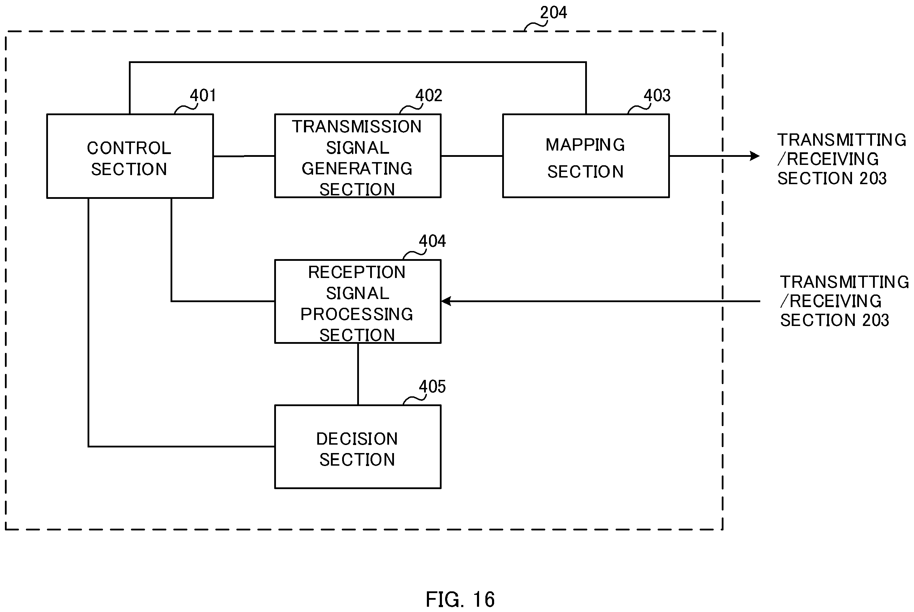

FIG. 16 is a diagram to show an example of a functional structure of a user terminal according to the present embodiment. Note that, although FIG. 16 primarily shows functional blocks that pertain to characteristic parts of the present embodiment, the user terminal 20 has other functional blocks that are necessary for radio communication as well. As shown in FIG. 16, the baseband signal processing section 204 provided in the user terminal 20 has a control section 401, a transmission signal generation section 402, a mapping section 403, a received signal processing section 404 and a decision section 405.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on. To be more specific, the control section 401 can control the transmission signal generation section 402, the mapping section 403 and the received signal processing section 404.

In predetermined subframes, if the transmission power configured for UL transmission exceeds a predetermined value, the control section 401 performs control so that part or all of the CSIs of the plurality of CCs are dropped. In this case, the control section 401 controls to implicitly or explicitly report the information on the drop of CSIs to the radio base station. Further, the control section 401 performs control so that the information on the drop of CSIs is reported to the radio base station using at least one of the demodulation reference (DMRS) signal scrambling sequence, the CS index and the CRC.

When HARQ-ACK and/or CSI allocated resources are reported in higher layer signaling, the control section 401 can control the allocated resources based on the ACK/NACK resource index (ARI) or the control channel element (CCE) index when the transmission power exceeds the predetermined value.

Further, the control section 401 can control to add information about the dropping of CSIs to uplink control information (HARQ-ACK and/or CSI) to be transmitted on the uplink control channel. Further, the control section 401 can use a different PUCCH format depending on whether or not CSIs are dropped. For example, the control section 401 applies PUCCH format 2 when dropping a part of the CSIs of a plurality of CCs to transmit one CSI, and applies a new PF or PF 3 when not dropping the CSIs of the plurality of CCs. For the control section 401, a controller, a control circuit or a control device that can be described based on common understanding of the technical field to which the present invention pertains can be used.

The transmission signal generation section 402 generates UL signals based on commands from the control section 401, and outputs these signals to the mapping section 403. For example, the transmission signal generation section 402 generates uplink control signals such as delivery acknowledgement signals (HARQ-ACKs), channel state information (CSI) and so on, based on commands from the control section 401.

Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal. For the transmission signal generation section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generation section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401. The received signal processing section 404 outputs, for example, broadcast information, system information, RRC signaling, DCI and so on, to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. When downlink signals (PDSCH) are transmitted from multiple CCs (for example, six or more CCs), retransmission control decisions (ACKs/NACKs) are made on a per CC basis, and output to the control section 401. For the decision section 405, a decision maker, a decision making circuit or a decision making device that can be described based on common understanding of the technical field to which the present invention pertains can be used.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-187224, filed on September 24, 2015, including the specification, drawings and abstract, is incorporated herein by reference in its entirety.

## Claims

1. A user terminal that can communicate with a radio base station by using a plurality of component carriers (CCs), the user terminal comprising:
a transmission section that transmits delivery acknowledgment signals for one or more CCs and/or channel state information of a plurality of CCs, in a predetermined subframe, on an uplink control channel; and
a control section that performs control so that part or all of the channel state information of the plurality of CCs is dropped when transmission power configured for UL transmission in the predetermined subframe exceeds a predetermined value.

2. The user terminal according to claim 1, wherein the control section performs control so that information on the drop of the channel state information is implicitly or explicitly reported to the radio base station.

3. The user terminal according to claim 2, wherein the control section performs control so that the information on the drop of the channel state information is reported using at least one of a demodulation reference signal scrambling sequence, a cyclic shift index and a CRC scrambling sequence.

4. The user terminal according to claim 2, wherein, when allocation resources for the delivery acknowledgment signals and/or the channel state information are reported in higher layer signaling, the control section controls the allocated resources based on an ACK/NACK resource index or a control channel element index if the transmission power exceeds the predetermined value.

5. The user terminal according to claim 2, wherein the control section adds information on the drop of the channel state information to the delivery acknowledgment signals and/or the channel state information to be transmitted in the uplink control channel.

6. The user terminal according to claim 1 or claim 2, wherein the control section uses a different PUCCH format depending on whether or not the channel state information is dropped.

7. The user terminal according to claim 6, wherein the control section applies PUCCH format 2 when a part of the channel state information of the plurality of CCs is dropped and one channel state information is transmitted, and the control section applies PUCCH format 3 or a PUCCH format having larger capacity than a PUCCH format of an existing system when the channel state information of the plurality of CCs is not dropped.

8. The user terminal according to one of claims 1 to 6, wherein the information on the drop of the channel state information is information to indicate that all the channel state information of a plurality of CCs is dropped or information on the number of channel state information to be transmitted.

9. A radio base station that communicates with a user terminal that uses a plurality of component carriers (CCs), the radio base station comprising:
a receiving section that receives, in an uplink control channel, delivery acknowledgment signals for one or more CCs and/or channel state information of a plurality of CCs that are transmitted from the user terminal in a predetermined subframe; and
a control section that controls a receiving process in the uplink control channel,
wherein the receiving section implicitly or explicitly receives information on drop of the channel state information in the user terminal.

10. A radio communication method for a user terminal that can communicate with a radio base station by using a plurality of component carriers (CC: Component Carrier), the radio communication method comprising:
transmitting delivery acknowledgment signals for one or more CCs and/or channel state information of a plurality of CCs, in a predetermined subframe, in an uplink control channel; and
performing control so that part or all of the channel state information of the plurality of CCs is dropped when transmission power configured for UL transmission in the predetermined subframe exceeds a predetermined value.
